# EUROPÄISCHE PATENTSCHRIFT

(11) **EP 1 531 956 B1**
(45) Veröffentlichungstag und Bekanntmachung des Hinweises auf die Patenterteilung: **11.10.2006**
(21) Anmeldenummer: 03790776.3
(22) Anmeldetag: 16.06.2003
(51) Int. Cl.: B23B 31/20, B23B 29/02

(54) **WERKZEUG ZUR SPANENDEN BEARBEITUNG**
CUTTING MACHINING TOOL
OUTIL D'USINAGE PAR ENLEVEMENT DE COPEAUX

(30) Priorität: 28.08.2002 DE 10239422
(43) Veröffentlichungstag der Anmeldung: 25.05.2005
(73) Patentinhaber: HARTMETALL-WERKZEUGFABRIK PAUL HORN GMBH, 72072 Tübingen (DE)
(72) Erfinder: OETTLE, Matthias, 72585 Riederich (DE)
(74) Vertreter: Bartels, Martin Erich Arthur
(86) Internationale Anmeldenummer: PCT/EP2003/006320
(87) Internationale Veröffentlichungsnummer: WO 2004/020130

(56) Entgegenhaltungen:
- DE-A- 10 052 016
- FR-A- 1 497 546
- GB-A- 598 240
- US-A- 1 765 362

## Beschreibung

Die Erfindung betrifft ein Werkzeug zur spanenden Bearbeitung, insbesondere in der Art einer Bohrstange, mit einem Halter, der an seinem einen Ende einen Festlegeschaft aufweist und am anderen Ende eine Aufnahme für einen auswechselbaren Schneidkörper mit einem Trägerteil, das zumindest teilweise im festgelegten Zustand in die Aufnahme eingreift, und mit einem Bearbeitungsteil, wobei das Trägerteil klemmend in der Aufnahme mittels eines Festlegeteils festlegbar ist, gemäß der Ausgestaltung nach dem Oberbegriff des Patentanspruches 1.

Durch die DE 41 02 529 A1 ist eine Werkzeughalterung für rotierend arbeitende Schneidwerkzeuge bekannt, insbesondere solche mit einer in Richtung der Rotationsachse erstreckten, in eine Werkzeugaufnahme eines Futters einsetzbaren Stange und einem am einen Stangenende exzentrisch angeordneten Schneidelement, wobei zur einstellbaren Veränderung des Arbeitsradius des Schneidwerkzeuges eine Werkzeugaufnahme mit zur Rotationsachse einstellbarer Exzentrizität angeordnet ist. Hierfür ist in einer Außenbuchse der bekannten Werkzeughalterung eine zur Achse dieser Buchse exzentrische, kreisförmige Öffnung und in dieser Öffnung eine Innenbuchse mit zur Zentralachse der Öffnung exzentrischer Aufnahme für das Schneidwerkzeug drehverstellbar angeordnet. Das Maß der Exzentrizität zwischen der Aufnahme für das Schneidwerkzeug und der Zentralachse der die Innenbuchse aufnehmenden Öffnung der Außenbuchse ist etwa gleich groß wie das Maß der Exzentrizität zwischen der Zentralachse der genannten Öffnung und der Außenbuchse. Mit der bekannten Werkzeughatterung ist es nur möglich, ein an einer Stange angeordnetes Schneidelement mit diesem über die futterartige Werkzeughalterung gemeinsam zu tauschen und das Schneidelement selbst ist in konventioneller Weise exzentrisch an der freien Stirnseite der in das Futter einsetzbaren Stange angeordnet. Aufgrund der Vielzahl der Bauteile baut diese bekannte Werkzeughalterung kompliziert und mithin teuer auf und eine hochgenaue Bearbeitung ist mit der dahingehenden Halterung gleichfalls nicht möglich.

Ein weiteres Werkzeug ist durch die DE 100 52 016 A1 bekannt. Das bekannte Werkzeug dient insbesondere einer rotierenden Fräsbearbeitung und weist einen die Drehachse definierenden Schaft als Halter auf. Dieser Halter ist mit einem Drehantrieb kuppelbar und weist an seinem freien Ende ein Kopfstück auf, mit dem ein Schneidkörper in einer Lageanordnung lösbar verbindbar ist, bei der sich die Schneide des Schneidkörpers in einem, einem gewünschten Schneidkreisdurchmesser entsprechenden Radialabstand von der Drehachse befindet. Ein als Halbkörper des Schneidkörpers dienender Trägerteil am Kopfstück ist um eine Einstellachse drehbar gelagert, die zur Drehachse des Schaftes parallel und zu dieser exzentrisch versetzt ist, wobei die Schneide des Schneidkörpers als Bearbeitungsteit am Trägerteil gegenüber der Einstellachse um einen Radialabstand versetzt anbringbar ist. Ferner ist bei der bekannten Lösung eine Arretiereinrichtung vorhanden, mittels deren das Schneidkörperteil mit dem Kopfstück in gewählten Drehpositionen verriegelbar ist, die dem gewünschten Schneidkreisdurchmesser der Schneide des Schneidkörpers entsprechen.

Die Aufnahme bei dem bekannten Werkzeug weist konvergierende Abstützflächen eines Abstützbereiches auf, die mit korrespondierend konvergierenden Anlageflächen des Trägerteils in Anlage bringbar sind. Züm Festlegen des Trägerteils in der Aufnahme des Halters dient eine Klemmverbindung, wobei als Festlegeteil eine Innensechskantschraube vorgesehen ist, die die Außenumfangswand der Aufnahme im Halter durchgreift und dergestalt das Bearbeitungsteil gegen die Abstützflächen des Abstützbereiches der Aufnahme preßt. Obwohl dergestalt eine sehr gute Einjustierung des Schneidkörpers im Halter möglich ist; eine Voraussetzung für eine hochgenaue Bearbeitung mit dem Schneidkörper, ist es wünschenswert, die dahingehende Festlegung noch weiter zu verbessern, um eine hochgenaue Bearbeitung zu erreichen.

Durch die FR-A-1 497 546 ist ein gattungsgemäßes Werkzeug zur spanenden Bearbeitung mit einem Halter bekannt, der an seinem einen Ende einen Festlegeschaft aufweist und am anderen Ende eine Aufnahme für einen auswechselbaren Schneidkörper mit einem Trägerteil, das zumindest teilweise im festgelegten Zustand in die Aufnahme eingreift, und mit einem Bearbeitungsteil, wobei das Trägerteil klemmend in der Aufnahme mittels eines Festlegeteils festlegbar ist. Bei der bekannten Lösung ist der Schaft des Trägerteils zylindrisch ausgebildet und in einer zylindrischen Aufnahme mittels eines Festlegeteils festlegbar, das über eine Schlitzführung mit der sonstigen Aufnahme einstückig verbunden ist und sich mittels einer Schraubverbindung in Richtung des Trägerteils zu dessen Fixierung anziehen läßt. Hierdurch kommt es zwangsläufig zu einer geringfügigen Verschiebung der Drehachsen von Halter und Trägerteil, die sich auch nicht wirksam dadurch kompensieren läßt, daß innerhalb der zylindrischen Aufnahme drei in den Aufnahmeraum vorspringende Stege die Mittenjustierung ermöglichen sollen. Eine hochgenaue Bearbeitung ist mit dem dahingehenden Werkzeug nicht möglich. Vergleichbare Überlegungen gelten auch für das gattungsgemäße Werkzeug nach der GB 598 240 A.

Durch die US-A-1 765 362 ist es bei einem Halter für Bohrwerkzeuge bekannt, die dahingehenden Werkzeuge mittels einer Klemm- oder Festlegehülse zu klemmen, indem die zylindrische Aufnahme in Richtung des Festlegeschaftes in diametral einander gegenüberliegenden Richtungen zur Längsachse mehrfach geschlitzt ist und dergestalt läßt sich durch Aufschrauben der Festlegehülse auf ein Außengewinde des geschlitzten Festlegebereichs der Bohrer an seinem schaftartigen Trägerteil klemmend festlegen. Durch die Schlitzführung ist bei Zustellung der Festlegehülse eine Festlegung des zylindrischen Bohrerschaftes über vier federelastische Zungenbereiche gegeben, was wiederum zu einer Überbestimmung des Festlegezustandes für das Trägerteil führt und mithin zu einer Verschiebung der korrespondierenden Längsachslagen von Halter und Bohrwerkzeug, was wiederum zu den Bearbeitungsungenauigkeiten führt.

Ausgehend von diesem vorstehend genannten Stand der Technik stellt sich die Erfindung die Aufgabe, für eine hochgenaue Bearbeitung durch die Bearbeitung auftretende eingeleitete Schwingungen in den Schneidkörper zielgerichtet durch den Halter des Werkzeuges aufzunehmen und derart auszugleichen und gleichzeitig eine kostengünstige und funktionssichere Haltemöglichkeit für den Schneidkörper zu schaffen. Eine dahingehende Aufgabenstellung löst ein Werkzeug zur spanenden Bearbeitung mit den Merkmalen des Patentanspruches 1 in seiner Gesamtheit.

Dadurch, daß gemäß dem kennzeichnenden Teil des Patentanspruches 1 der Abstützbereich zueinander konvergierende Abstützflächen aufweist, die in Anlage bringbar sind mit korrespondierend konvergierend ausgebildeten Anlageflächen am Trägerteil, daß der Zustellbereich mit seiner Zustellfläche sich quer zu den Abstützflächen des Abstützbereiches erstreckt und dergestalt auf eine weitere Anlagefläche am Trägerteil einwirkt, und daß das Festlegeteil eine Festlegehülse mit einem Innengewinde aufweist, die auf ein Außengewinde des Halters aufschraubbar ist, in das die jeweiligen Schlitze der Aufnahme münden, ist die bekannte Innensechskantschraube nach der DE 100 52 016 A1 mit punktueller Krafteinleitung für den Festlegevorgang des Schneidkörpers in der Aufnahme des Halters durch eine flächige Abstützung mit teilweise konvergierenden Abstützflächen und durch den bewegbaren Zustellbereich der Aufnahme ersetzt. Somit läßt sich über einen größeren Festlegebereich der Schneidkörper mittels eines Trägerteils in der Aufnahme sicher festlegen und insgesamt sind anhand dreier Flächenbereiche am Außenumfang des Trägerteils eine sichere Festlegung und Abstützung erreicht im Gegensatz zu der unbestimmten Anlagesituation mit vier flexiblen Anlagezungen, die über eine Festlegehülse klemmend zustellbar sind nach der technischen Lehre der US-A-1 765 362. Eventuell bei der Bearbeitung mit dem Bearbeitungsteil des Schneidkörpers auftretende Schwingungen lassen sich dergestalt zielgerichtet und über weite Flächenbereiche der Aufnahme in den Halter ableiten, so daß aufgrund der verbesserten Abstütz- und Anlagesituation Toleranzen bei der Bearbeitung weitgehend vermieden sind.

Die erfindungsgemäße Anordnung stellt über die zueinander konvergierenden Abstützflächen eine Flächenantage sicher, so daß über weite Bereiche eine Krafteinleitung in den Halter erfolgt und die Zustellftäche drückt das Trägerteil des Schneidkörpers keilartig in Richtung der konvergierenden Abstützflächen innerhalb der Aufnahme des Halters. Aufgrund der dahingehenden Ausgestaltung sind Verkantungen oder eine Schrägeinleitung der Klemmkräfte, wie bei den bekannten Lösungen, beispielsweise nach der FR-A-1 497 546, mit Sicherheit vermieden.

Das erfindungsgemäße Werkzeug läßt sich als rotierendes Bearbeitungswerkzeug in der Art eines Fräswerkzeuges oder einer Bohrstange einsetzen; es besteht aber auch die Möglichkeit der Ausbildung eines Drehwerkzeuges, bei dem das Werkzeug selbst stillsteht und das Werkstück sich gegenüber dem feststehenden Werkzeug dann entlang einer Bearbeitungsachse dreht. Ferner sind Relativbewegungen zwischen Werkzeug und Werkstück für einen speziellen Bearbeitungsvorgang möglich. Vorzugsweise ist dabei der Schneidkörper in der Art eines üblichen austauschbaren Hartmetall-Schneidwerkzeuges, wie es beispielsweise in der DE 100 52 016 A1 offenbart ist, ausgebildet.

Vorzugsweise ist des weiteren vorgesehen, daß die Festlegehülse im aufgeschraubten Zustand eine sich zum Bearbeitungsteil des Schneidkörpers konvergierend verjüngende Klemmfläche ausbildet, die mit einer korrespondierend sich verjüngenden Umfangsfläche der Aufnahme zusammenwirkt, die von den Schlitzen der Aufnahme durchgriffen ist. Mittels der dahingehenden Festlegehülse ist erreicht, daß über diese mit geringem Kraftaufwand die Zustellbewegung des Zustellbereiches auf den Abstützbereich erfolgen kann, wobei es möglich ist, den dahingehenden Festlegevorgang auch von Hand durchzuführen, indem man die Festlegehülse über die korrespondierenden Gewinde am Halter aufschraubt. Durch eine Abschraubbewegung der Festlegehülse läßt sich die Klemmung dann freigeben und den Schneidkörper über sein Trägerteil aus der Aufnahme von Hand entfernen. Dabei kann die Festlegehülse am Halter verbleiben. Vorzugsweise besteht aber auch die Möglichkeit, über Angriffsstellen am Außenumfang der Festlegehülse diese mittels eines üblichen Handhabungswerkzeuges, wie eines Schraubenschlüssels, festzulegen oder, wie dargestellt, zu lösen.

Bei einer besonders bevorzugten Ausführungsform des erfindungsgemäßen Werkzeuges weist in seiner Längsrichtung zumindest die Innenfläche des Zustellbereiches, die dem Trägerteil des Schneidkörpers zugewandt ist, in balliger Ausbildung eine konvexe Klemmfläche auf. Somit lassen sich auch in Längsrichtung des Werkzeuges etwaige Verkantungen innerhalb der Aufnahme über die konvexe Klemmfläche ausgleichen, wobei sich dergestalt auch die Einleitung der aufzubringenden Klemmkraft erhöhen läßt.

Bei einer weiteren bevorzugten Ausführungsform des erfindungsgemäßen Werkzeuges stützt die Festlegehülse sich in ihrem mittleren Bereich über ihr Innengewinde am Außengewinde der Aufnahme ab und an ihren freien Enden zum einen am vorderen Außenumfang der Aufnahme und zum anderen am vorderen Bereich des Halters, der an seinem rückwärtigen Bereich in einem Festlegeschaft endet. Somit ist die Festlegehülse an ihrem vorderen und hinteren Ende zusätzlich abgestützt und die bei der Bearbeitung an der Schneide des Schneidkörpers eingeleiteten Kräfte sind dergestalt über die Aufnahme in die Festlegehülse ableitbar, die aufgrund der Vielzahl der Abstützmöglichkeiten ein sicheres Widerlager für die eingeleiteten Kräfte ergibt.

Bei einer weiteren besonders bevorzugten Ausführungsform des erfindungsgemäßen Werkzeuges ist die Zustellfläche des Zustellbereiches konkav gekrümmt und die weitere Anlagefläche des Trägerteils des Schneidkörpers ist in diesem Bereich stärker konvex gekrümmt als die konkave Krümmung der mit ihr zusammenwirkenden Zustellfläche. Dergestalt ist in Längsrichtung des Werkzeuges neben der bereits erwähnten balligen Anlagemöglichkeit über die gekrümmten Flächen eine sich selbstjustierende Klemmkraft in Richtung der konvergierenden Abstützflächen des Abstützbereiches innerhalb der Aufnahme im Halter erreicht.

Vorzugsweise ist dabei vorgesehen, daß die konvergierenden Abstützflächen des Abstützbereiches an ihren einander zugewandten Enden über einen Verbindungsbereich miteinander verbunden sind, dessen Wandstärke dünner ist als die gewählten Wandstärken des Abstützbereiches im Bereich seiner Abstützflächen. Hierdurch ergibt sich über den Verbindungsbereich ein federelastisches Einleitungsverhalten der Klemmkräfte über die Abstützflächen mit einer entsprechenden Rückstellkraft, sobald der Schneidkörper über sein Trägerteil in der Aufnahme festgelegt ist. Vorzugsweise ist dabei des weiteren vorgesehen, daß im Querschnitt der Aufnahme betrachtet diese im wesentlichen 2/3 durch den Abstützbereich und 1/3 durch den Zustellbereich gebildet ist.

Im folgenden wird das erfindungsgemäße Werkzeug zur spanenden Bearbeitung anhand eines Ausführungsbeispiels nach der Zeichnung näher erläutert. Dabei zeigen die
- Fig. 1 bis 3: im Maßstab 4 : 1 eine perspektivische Ansicht auf die Stirnseite des Werkzeuges, einmal mit aufgenommenem Schneidkörper und festgelegter Hülse am Halter, einmal mit eingesetztem Schneidkörper in den Halter ohne Festlegehülse und einmal den stirnseitigen Bereich des Halters ohne Festlegehülse und ohne Schneidkörper;
- Fig.4: einen Längsschnitt des vorderen Bereiches des Werkzeuges gemäß der Darstellung nach der Fig.1, gleichfalls im Maßstab 4 : 1 und
- Fig.5: im selben Maßstab die stirnseitige Draufsicht auf das Werkzeug gemäß der Darstellung nach der Fig. 1.

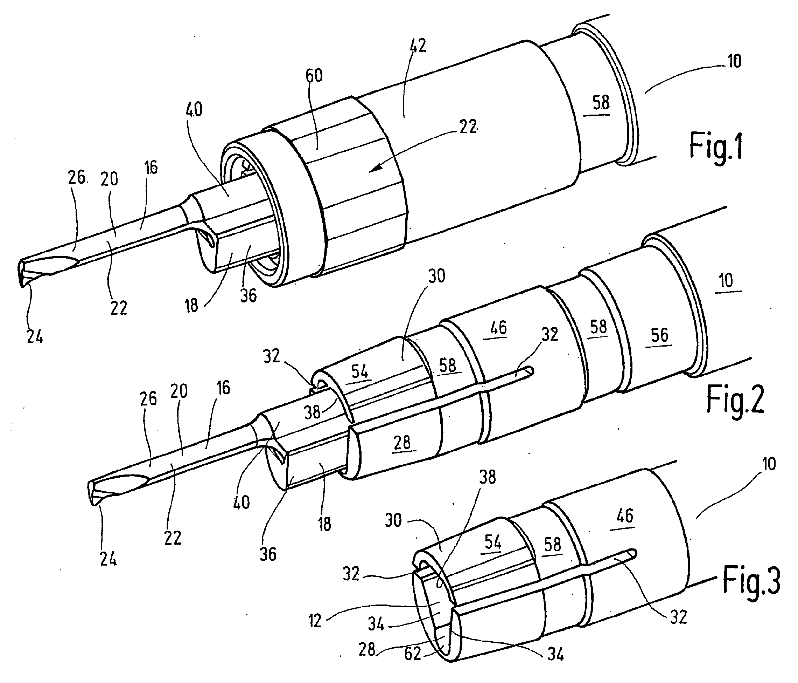

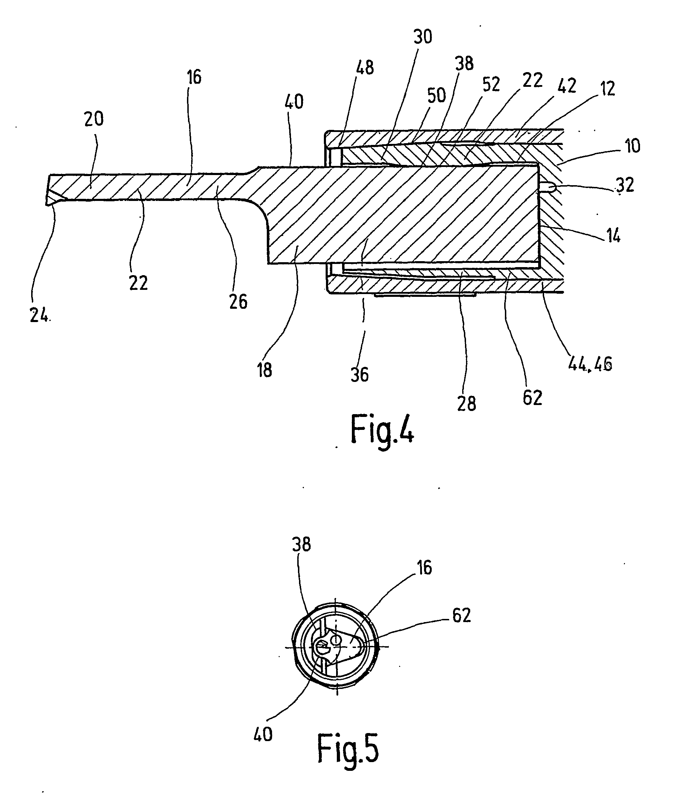

Das erfindungsgemäße Werkzeug dient der spanenden Bearbeitung und ist insbesondere in der Art einer Bohrstange ausgebildet. Das Werkzeug weist einen Halter 10 auf, der in Blickrichtung auf die Fig.1 bis 3 gesehen in Richtung seines hinteren Endes in einen Festlegeschaft (nicht vollständig dargestellt) übergeht, mittels dessen das Werkzeug sich in einer Bearbeitungsmaschine, wie beispielsweise einer Werkzeugmaschine, Bohrmaschine od. dgl., festlegen läßt. Am gegenüberliegenden Ende, also in Blickrichtung auf die Fig.1 bis 3 gesehen dem Betrachter zugewandt, mündet der Halter 10 in eine Aufnahme 12 (vgl. Fig.3 und 4), die an ihrem vorderen Ende ins Freie mündet und an ihrem hinteren Ende von einer stirnseitigen Innenfläche 14 des Halters 10 (vgl. Fig.4) begrenzt ist. Die Aufnahme 12 dient der Aufnahme für einen auswechselbaren Schneidkörper 16 mit einem Trägerteil 18, das zumindest teilweise im festgelegten Zustand (vgl. Fig.1 und 2) in die Aufnahme 12 eingreift. Am gegenüberliegenden Ende des Schneidkörpers 16 weist dieser ein Bearbeitungsteil 20 auf, wobei das Trägerteil 18 klemmend in der Aufnahme 12 mittels eines als Ganzes mit 22 bezeichneten Festlegeteils festlegbar ist, was im folgenden noch näher erläutert werden wird. Der in der Art eines Hartmetall-Werkzeuges ausgebildete Schneidkörper 16 hat am vorderen Ende seines Bearbeitungsteils 20 eine Schneide 24, die über ein Schaftteil 26 mit dem Trägerteil 18 einstückig verbunden ist. Das dahingehende Schaftteil 26 ist dabei im Bereich der Oberkante des Trägerteils 18 des Schneidkörpers 16 angebracht. Ein dahingehender Schneidkörper ist im Stand der Technik bekannt (vgl. beispielsweise die bereits genannte DE 100 52 016 A1).

Wie insbesondere die Fig.3 zeigt, weist die Aufnahme 12 am vorderen Ende des Halters 10 einen Abstützbereich 28 auf und in Blickrichtung auf die Fig.3 gesehen darüber liegend einen Zustellbereich 30. Für einen Festlege- oder Austauschvorgang des Schneidkörpers 16 mittels des Festlegeteils 22 sind die beiden Bereiche 28,30 aufeinander zu- bzw. voneinander wegbewegbar. Zur Bildung des dahingehenden Abstütz- 28 und Zustellbereiches 30 ist die Aufnahme 12 in Richtung des Festlegeschaftes des Halters 10 geschlitzt, wobei dergestalt zwei Schlitze 32 in der Art von Längsschlitzen entstehen, die in einer gemeinsamen Ebene quer zur Längsachse des Halters 10 sich erstrecken und in der gleichen Tiefe im Halter 10 münden. Über die dahingehenden beiden Schlitze 32 ist eine federelastische Relativbewegung der beiden Bereiche 28,30 zueinander ermöglicht.

Der Abstützbereich 28 weist zueinander konvergierende Abstützflächen 34 auf (vgl. Fig.3), die sich dergestalt keilartig fiktiv in Blickrichtung auf die Fig.3 gesehen nach unten hin verjüngen. Die dahingehenden Abstützflächen 34 sind in Anlage bringbar mit korrespondierend konvergierend ausgebildeten Anlageflächen 36 am Trägerteil 18 (vgl. Fig.1 und 2), wobei der Zustellbereich 30 wiederum eine Zustellfläche 38 aufweist, die sich quer zu den Abstützflächen 34 des Abstützbereiches 28 erstreckt und dergestalt in klemmender Situation auf eine weitere Anlagefläche 40 am Trägerteil 18 des Schneidkörpers 16 einwirken kann.

Das Festlegeteil 22 weist eine im wesentlichen zylindrisch ausgebildete Festlegehülse 42 auf mit einem Innengewinde 44 (vgl. Fig.4), die im zugeordneten Bereich auf ein Außengewinde 46 des Halters 10 aufschraubbar ist, wobei das dahingehende Außengewinde 46 an seinem vorderen Ende (vgl. Fig.3) von den beiden gegenüberliegenden Schlitzen 32 der Aufnahme 12 durchgriffen ist. Wie des weiteren die Fig.4 zeigt, bildet die Festlegehülse 42 im aufgeschraubten Zustand eine sich zum Bearbeitungsteil 20 des Schneidkörpers 16 konvergierend verjüngende Klemmfläche 48 aus, die mit einer korrespondierend sich verjüngenden Umfangsfläche 50 der Aufnahme 12 zusammenwirkt, die von den Schlitzen 32 der Aufnahme 12 durchgriffen ist, wobei letzteres nur insoweit gilt, als über die Festlegehülse 42 in deren festgelegtem Zustand eine Klemmkraft über die zungenartig sich nach vorne erstreckende Zustellfläche 38 auf die Oberseite des Trägerteils 18 des Schneidkörpers 16 ausgeübt wird. Ist die Festlegehülse 42 entsprechend gelöst oder vom Halter 10 abgeschraubt, löst sich unter der federelastischen Rückstellwirkung des Zustellbereiches 30 die Zustellfläche 38 von der Oberseite des Bearbeitungsteils 20 des Schneidkörpers 16 und mithin bewegt sich dergestalt die Umfangsfläche 50 gleichfalls mit, wobei im entsprechend gelösten Zustand das Trägerteil 18 dann freigegeben ist und der Schneidkörper 16 kann aus der Aufnahme 12 entfernt werden, um beispielsweise den Schneidkörper 16 im Verschleißfall gegen einen neuen auszutauschen. Durch erneutes Aufschrauben der Festlegehülse 42 auf den zuordenbaren Halter 10 werden dann wiederum die Klemmkräfte hergestellt und dergestalt der Schneidkörper 16 in der Aufnahme 12 festgelegt.

Des weiteren ist in Fig.4 ersichtlich, daß in Längsrichtung des Werkzeuges zumindest die Innenfläche 52 des Zustellbereiches 30 und mithin ein Teil der Zustellfläche 38, die dem Trägerteil 18 des Schneidkörpers 16 zugewandt ist, unter Bildung einer konvexen Klemmfläche ballig ausgebildet ist. Dergestalt lassen sich die Klemmkräfte auf den Schneidkörper 16 im Festlegezustand erhöhen und darüber hinaus ist auch in Längsrichtung des Werkzeuges eine Zentrierung der Krafteinleitung während der Bearbeitungssituation in den Halter 10 gegeben.

Wie besonders Fig.2 verdeutlicht, stützt sich die Festlegehülse 42 nicht nur in ihrem mittleren Bereich über ihr Innengewinde 44 am Außengewinde 46 der Aufnahme 12 ab, sondern vielmehr findet auch eine Abstützung an ihren beiden freien Enden statt, und zwar zum einen am vorderen Außenumfang 54 der Aufnahme sowie im rückwärtigen Bereich am Außenumfang des Halters 10, und zwar im Bereich einer ringförmig abgesetzten Stelle 56. Die vom Außenumfang her im wesentlichen sich entsprechenden Bereiche 54,46 und 56 (vgl. Fig.2) sind über entsprechende Ringausnehmungen 58 in axialer Richtung voneinander separiert. Die über die Festlegehülse 42 derart aufgenommenen Festlegekräfte lassen sich somit verkantungs- und kippfrei über größere Flächen in den Halter 10 ein- und dergestalt ableiten. Des weiteren kann die Festlegehülse 42, wie dies die Darstellung nach der Fig.1 zeigt, in ihrem vorderen Bereich eine Handhabe 60 aufweisen, die einen Betätigungsangriff von Hand erlaubt, aber auch dem Ansatz eines nicht näher dargestellten Sechskantschraubenschlüssels od. dgl. dienen kann. Vorzugsweise ist das erfindungsgemäße Werkzeug jedoch derart ausgelegt, daß die Festlegehülse 42 sich von Hand auf den Halter 10 auf- oder abschrauben läßt. Gemäß der Darstellung nach der Fig.5 ist die Zustellfläche 38 bei stirnseitiger Ansicht auf das Werkzeug in Richtung der Aufnahme 12 gesehen konkav gekrümmt und die weitere Anlagefläche 40 des Trägerteils 18 des Schneidkörpers 16 ist in diesem Bereich stärker konvex gekrümmt als die konkave Krümmung der genannten Zustellfläche 38.

Neben der bereits genannten und in der Fig.4 gezeigten balligen Ausgestaltung in Längsrichtung des zungenartigen Zustellbereiches 30 ist dergestalt eine linienförmige Krafteinleitung über die beschriebene Klemmung des Halters 10 erreicht und der Schneidkörper 16 kann sich über sein Trägerteil 18 selbstjustierend in die keilförmige Aufnahme des Abstützbereiches 28 einfügen.

Ferner ist vorgesehen, daß die beiden konvergierenden Abstützflächen 34 des Abstützbereiches 28 an ihren einander zugewandten Enden über einen Verbindungsbereich 62 miteinander verbunden sind, dessen Wandstärke dünner ist als die gewählten Wandstärken des Abstützbereiches 28 im Bereich seiner Abstützflächen 34, die im übrigen über den genannten Verbindungsbereich 62 dergestalt abgesetzt sind, daß gemäß der Darstellung nach der Fig.5 in Blickrichtung auf diese der Schneidkörper 16 am unteren Ende nur wandseitig von den Abstützflächen 34 getragen ist und nicht von der Oberseite des gerundeten Verbindungsbereiches 62 an dieser Stelle. Dies erlaubt eine sichere Zentrierung des Schneidkörpers 16 über sein Trägerteil 18 in der Aufnahme 12. Gleichzeitig ergibt dies eine elastisch wirkende Keilverbindung, da der Verbindungsbereich 62 geringfügig elastisch nachgiebig Einpreßvorgänge des Trägerteils 18 in die keilförmigen Abstützflächen 34 ausgleicht. Dies wird noch dadurch unterstützt, daß im Querschnitt der Aufnahme 12 (vgl. Fig.5) gesehen, diese im wesentlichen zwei Drittel durch den Abstützbereich 28 und zu einem Drittel durch den Zustellbereich 30 gebildet ist.

Will man gemäß der Darstellung nach der Fig.1 den Schneidkörper 16 bei Verschleiß gegen einen neuen tauschen, wird das Festlegeteil 22 gelöst, indem man die Festlegehülse 42 vom Halter 10 so lange abschraubt, bis die Klemmung über die konische Zuführung der Festlegehülse 42 gelöst ist. Der Schneidkörper 16 läßt sich dann über sein Trägerteil 18 aus der Aufnahme 12 herausziehen und ein neu eingesetztes Bearbeitungswerkzeug in Form des Schneidkörpers 16 wird so lange in die Aufnahme 12 eingeschoben, bis das rückwärtige Ende des Trägerteils 18 an die stirnseitige Innenfläche 14 der Aufnahme 12 des Halters 10 anstößt. Danach wird die Festlegehülse 42 wieder auf den Halter 10 in umgekehrter Richtung aufgeschraubt und durch die beschriebenen Konizitäten zwischen Innenseite der Festlegehülse 42 und Außenumfangsseite von Abstütz- und Zustellbereich 28,30 wird der Zustellbereich 30 klemmend gegen den Abstützbereich 28 zugestellt und dergestalt das Trägerteil 18 des Schneidkörpers 16 entlang von drei dreieckförmig im Querschnitt gesehen zueinander angeordneten Flächenbereichen klemmend festgelegt. In der festgelegten Situation ist der Schneidkörper 16 sicher und definiert zentriert und auch bei der spanenden Bearbeitung, wo hohe Bearbeitungskräfte über die Schneide 24 in das Schaftteil 26 und dann in das Trägerteil 18 abgeleitet werden, treten dergestalt keine Schwingungen mehr auf, was einer hochgenauen Bearbeitung mit dem Werkzeug zugute kommt.

## Patentansprüche

1. Werkzeug zur spanenden Bearbeitung, insbesondere in der Art einer Bohrstange, mit einem Halter (10), der an seinem einen Ende einen Festlegeschaft aufweist und am anderen Ende eine Aufnahme (12) für einen auswechselbaren Schneidkörper (16) mit einem Trägerteil (18), das zumindest teilweise im festgelegten Zustand in die Aufnahme (12) eingreift, und mit einem Bearbeitungsteil (20), wobei das Trägerteil (18) klemmend in der Aufnahme (12) mittels eines Festlegeteils (22) festlegbar ist, wobei die Aufnahme (12) einen Abstützbereich (28) und neben dem Abstützbereich (28) einen Zustellbereich (30) aufweist, wobei für einen Festlege- oder Austauschvorgang des Schneidkörpers (16) mittels des Festlegeteils (22) die beiden Bereiche (28,30) aufeinander zu- bzw. voneinander wegbewegbar sind, wobei zur Bildung des Abstütz- (28) und des Zustellbereiches (30) die Aufnahme (12) in Richtung des Festlegeschaftes geschlitzt ist, und wobei über den jeweiligen Schlitz (32), der auf seiner einen Seite ins Freie mündet, eine federelastische Relativbewegung der beiden Bereiche (28,30) zueinander ermöglicht ist, **dadurch gekennzeichnet, daß** der Abstützbereich (28) zueinander konvergierende Abstützflächen (34) aufweist, die in Anlage bringbar sind mit korrespondierend konvergierend ausgebildeten Anlageflächen (36) am Trägerteil (18), daß der Zustellbereich (30) mit seiner Zustellfläche (38) sich quer zu den Abstützflächen (34) des Abstützbereiches (28) erstreckt und dergestalt auf eine weitere Anlagefläche (40) am Trägerteil (18) einwirkt, und daß das Festlegeteil (22) eine Festlegehülse (42) mit einem Innengewinde (44) aufweist, die auf ein Außengewinde (46) des Halters (10) aufschraubbar ist, in das die jeweiligen Schlitze (32) der Aufnahme (12) münden.

2. Werkzeug nach Anspruch 1, **dadurch gekennzeichnet, daß** die Festlegehülse (42) im aufgeschraubten Zustand eine sich zum Bearbeitungsteil (20) des Schneidkörpers (16) konvergierend verjüngende Klemmfläche (48) ausbildet, die mit einer korrespondierend sich verjüngenden Umfangsfläche (50) der Aufnahme (12) zusammenwirkt, die von den Schlitzen (32) der Aufnahme (12) durchgriffen ist, bei geklemmter Festlegung des Schneidkörpers (16) im Halter (10).

3. Werkzeug nach Anspruch 2, **dadurch gekennzeichnet, daß** in seiner Längsrichtung zumindest die Innenfläche (52) des Zustellbereiches (30), die dem Trägerteil (18) des Schneidkörpers (16) zugewandt ist, unter Bildung einer konvexen Klemmfläche ballig ausgebildet ist.

4. Werkzeug nach einem der Ansprüche 1 bis 3, **dadurch gekennzeichnet, daß** die Festlegehülse (42) sich in ihrem mittleren Bereich über ihr Innengewinde (44) am Außengewinde (46) der Aufnahme (12) abstützt und an ihren freien Enden; zum einen am vorderen Außenumfang (54) der Aufnahme (12) und zum anderen am vorderen Bereich (56) des Halters (10).

5. Werkzeug nach einem der Ansprüche 1 bis 4, **dadurch gekennzeichnet, daß** die Zustellfläche (38) des Zustellbereiches (30) konkav gekrümmt ist und daß die weitere Anlagefläche (40) des Trägerteils (18) des Schneidkörpers (16) in diesem Bereich stärker konvex gekrümmt ist als die konkave Krümmung der in Anlage bringbaren Zustellfläche (38).

6. Werkzeug nach einem der Ansprüche 1 bis 5, **dadurch gekennzeichnet, daß** die konvergierenden Abstützflächen (34) des Abstützbereiches (28) an ihren einander zugewandten Enden über einen Verbindungsbereich (62) miteinander verbunden sind, dessen Wandstärke dünner ist als die gewählten Wandstärken des Abstützbereiches (28) im Bereich seiner Abstützflächen (34).

7. Werkzeug nach einem der Ansprüche 1 bis 6, **dadurch gekennzeichnet, daß** im Querschnitt der Aufnahme (12) gesehen, diese im wesentlichen zwei Drittel durch den Abstützteil (28) und zu einem Drittel durch den Zustellbereich (30) gebildet ist.

## Claims

1. Tool for planing processing, in particular in the way of a drill bit, with a holder (10) comprising a fitting shaft at its one end, and a take-up (12) at its other end, for a replaceable cutter (16) with a carrier part (18) engaging the take-up (12) in its fixed condition at least in part, and with a processing piece (20), whereby the carrier part (18) can be clampingly fixed within the take-up (12) by means of a fitting part (22), whereby the take-up (12) comprises a support area (28) and a delivery area (30) adjacent to the support area (28), whereby the two areas (28, 30) can be moved towards, i.e. away from each other for fitting or replacing the cutter (16) by means of the fitting part (22), whereby the take-up (12) is slotted in the direction of the fitting shaft for forming the support (28) and the delivery area (30), and whereby a spring elasticised relative movement of the two areas (28, 30) in relation to each other is possible thanks to the relevant slot (32) which opens to atmosphere on one side, **characterised in that** the support area (28) comprises support surfaces (34) converging towards each other, which can be brought into abutment against corresponding converged abutment surfaces (36) on the carrier part (18), **in that** the delivery area (30) with its delivery surface (28) extends transverse to the support surfaces (34) of the support area (28) and acts upon an additional abutment surface (40) on the carrier part (18) in this way, and **in that** the fitting part (22) comprises a fitting sleeve (42) with an internal thread (44), which can be screwed onto an external thread (46) of the holder (10), into which the relevant slots (32) of the take-up (12) open out.

2. Tool according to Claim 1, **characterised in that** the fitting sleeve (42) forms a clamping surface (48) that convergingly narrows in the direction of the processing piece (20) of the cutter (16) in its screwed-on condition, which co-operates with a corresponding narrowing circumference surface (50) of the take-up (12) which is engaged by the slots (32) of the take-up (12) when the cutter (16) is fitted in the holder (10).

3. Tool according to Claim 2, **characterised in that** in its longitudinal direction at least the inner surface (52) of the delivery area (30) that faces the carrier part (18) of the cutter (16) is formed in a spherical way to form a convex clamping surface.

4. Tool according to one of the Claims 1 to 3, **characterised in that** the fitting sleeve (42) is supported by means of its internal thread (44) on an external thread (46) of the take-up (12) in its central area and at its free ends; on the one hand at the front outer circumference (54) of the take-up (12), and on the other in the front area (56) of the holder (10).

5. Tool according to one of the Claims 1 to 4, **characterised in that** the delivery surface (38) of the delivery area (30) is concavely arced, and **in that** the additional abutment surface (40) of the carrier part (18) of the cutter (16) is more strongly convexly arced in this area than the convex arcing of the delivery surface (38) that can be abutted.

6. Tool according to one of the Claims 1 to 5, **characterised in that** the converging support surfaces (34) of the support area (28) are connected with each other at their ends that face each other via a connection area (62), the wall thickness of which is less than the selected wall thickness of the support area (28) in the area of its support surfaces (34).

7. Tool according to one of the Claims 1 to 6, **characterised in that** two thirds of the cross-section of the take-up (12) substantially consists of the support part (28), and one third of the delivery area (30).

## Revendications

1. Outil d'usinage par enlèvement de copeaux, notamment sous la forme d'une barre d'alésage, comprenant un support (10) qui présente, à une extrémité, une queue de fixation, et à l'autre extrémité, un logement de réception (12) pour un corps de coupe (16) interchangeable, qui comporte une partie de support (18) pénétrant au moins partiellement, dans l'état fixé, dans le logement de réception (12), et comporte également une partie d'usinage (20), la partie de support (18) pouvant être fixée par serrage dans le logement de réception (12) au moyen d'une pièce de fixation (22), le logement de réception (12) présentant une zone d'appui (28) et à côté de la zone d'appui (28) une zone de fermeture (30), les deux zones (28, 30) pouvant être rapprochées ou éloignées l'une de l'autre pour une opération respective de fixation ou de remplacement du corps de coupe (16) au moyen de la pièce de fixation (22), le logement de réception (12) étant fendu dans la direction de la queue de fixation pour former la zone d'appui (28) et la zone de fermeture (30), et un mouvement relatif élastique des deux zones (28, 30) l'une par rapport à l'autre étant rendu possible par l'intermédiaire de ladite fente respective (32) qui débouche librement sur un côté, **caractérisé en ce que** la zone d'appui (28) présente des surfaces d'appui (34) mutuellement convergentes, qui peuvent être appliquées contre des surfaces d'application (36) réalisées convergentes de manière correspondante sur la partie de support (18), **en ce que** la zone de fermeture (30) s'étend avec sa surface de fermeture (38) transversalement aux surfaces d'appui (34) de la zone d'appui (28) et agit de cette manière sur une autre surface d'application (40) sur la partie de support (18), et **en ce que** la pièce de fixation (22) comprend une douille de fixation (42) avec un filetage intérieur (44), qui peut être vissée sur un filetage extérieur (46) du support (10), dans lequel débouchent les fentes (32) respectives du logement de réception (12).

2. Outil selon la revendication 1, **caractérisé en ce que** la douille de fixation (42), dans l'état vissé, forme une surface de serrage (48) qui se rétrécit de manière convergente en direction de la partie d'usinage (20) du corps de coupe (16), et, lorsque le corps de coupe (16) est fixé par serrage dans le support (10), coopère avec une surface périphérique (50) du logement de réception (12), qui se rétrécit de manière convergente correspondante et est traversée par les fentes (32) du logement de réception (12).

3. Outil selon la revendication 2, **caractérisé en ce que** dans sa direction longitudinale, au moins la surface intérieure (52) de la zone de fermeture (30), qui est dirigée vers la partie de support (18) du corps de coupe (16), est réalisée bombée pour former une surface de serrage convexe.

4. Outil selon l'une des revendications 1 à 3, **caractérisé en ce que** la douille de fixation (42) s'appuie, dans sa zone centrale, par l'intermédiaire de son filetage intérieur (44), sur le filetage extérieur (46) du logement de réception (12), et à ses extrémités libres, d'une part sur la périphérie extérieure avant (54) du logement de réception (12) et d'autre part sur la zone avant (56) du support (10).

5. Outil selon l'une des revendications 1 à 4, **caractérisé en ce que** la surface de fermeture (38) de la zone de fermeture (30) est courbée de manière concave, et **en ce que** ladite autre surface d'application (40) de la partie de support (18) du corps de coupe (16) est, dans cette zone, courbée de manière convexe plus forte que la courbure concave de la surface de fermeture (38) pouvant y être appliquée.

6. Outil selon l'une des revendications 1 à 5, **caractérisé en ce que** les surfaces d'appui (34) convergentes de la zone d'appui (28) sont reliées l'une à l'autre à leurs extrémités dirigées l'une vers l'autre, par l'intermédiaire d'une zone de liaison (62) dont l'épaisseur de paroi est plus mince que les épaisseurs de paroi choisies de la zone d'appui (28) dans la région de ses surfaces d'appui (34).

7. Outil selon l'une des revendications 1 à 6, **caractérisé en ce que** vu dans la section transversale du logement de réception (12), celui-ci est formé sensiblement pour les deux tiers par la partie d'appui (28) et pour un tiers par la zone de fermeture (30).
